(19) Europäisches Patentamt / European Patent Office / Office européen des brevets

(11) **EP 4 618 340 A1**

(12) **EUROPEAN PATENT APPLICATION**

(43) Date of publication:
**17.09.2025  Bulletin 2025/38**

(51) International Patent Classification (IPC):
*H02H 3/40* $^{(2006.01)}$

(21) Application number: 24162663.9

(52) Cooperative Patent Classification (CPC):
H02H 3/40

(22) Date of filing: **11.03.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
• **WANG, Jianping**
  **724 60 Västerås (SE)**
• **LI, YouYi**
  **722 19 Västerås (SE)**
• **GAJIC, Zoran**
  **723 47 Västerås (SE)**

(74) Representative: **Vossius & Partner**
**Patentanwälte Rechtsanwälte mbB**
**Siebertstrasse 3**
**81675 München (DE)**

(54) **DISTANCE PROTECTION FOR SYMMETRICAL THREE PHASE FAULTS REACH POINT VOLTAGE CALCULATION**

(57)    The present invention provides a method and device for determining an internal fault in a three-phase transmission line. The method comprises the steps of obtaining phase voltage signals for a reach point on the three-phase transmission line, determining reach point sequence voltages from the phase voltage signals, determining modified reach point sequence voltages by delaying one of the phase voltage signals at the reach point, obtaining an operation quantity and a restrain quantity using the modified reach point voltages, and determining an internal symmetrical fault in the three-phase transmission line based on a comparison of the operation quantity and the restrain quantity.

EP 4 618 340 A1

**Description**

The present disclosure relates to a method, a device, and a system for controlling and protecting an electrical system comprising a transmission line.

In an electrical system comprising a transmission line, it is of high importance to accurately identify a fault type for further corrective actions. Among others, a distance protection is widely used to protect the transmission line. However, due to the increasing use of variable renewable sources, it has become challenging for conventional methods to process the measurements due to distorted fault current waveforms and higher harmonic components, especially for Doubly fed induction generators (DFIG) connected transmission lines. The following briefly discusses the basic principle of the distance protection and the conventional methods being utilized therewith.

Conventionally, the distance protection relies on computing the measured line impedance, which reflects the positive-sequence impedance of protected transmission lines. The calculation is based on Ohm's law as given below: There may be two types of calculation loops for impedance measurements: 1) based on phase-to-ground loop and 2) based on phase-phase loop measurement. Phase-to-ground loop impedance may be computed as follows:

$$Z_{PG} = \frac{V_{PG}}{I_{PG} + K_0 I_0} \qquad (1)$$

wherein

$V_{PG}$ denotes a phase-to-ground voltage measured at a relay location of a transmission line,
$I_{PG}$ denotes a phase-to-ground loop current measured at a relay location of a transmission line such as $I_A$, $I_B$, $I_C$,

$I_0$ denotes a measured zero-sequence current from the three phase currents, i.e., $I_0 = \frac{1}{3}(I_A + I_B + I_C)$,

$K_0$ denotes a compensation factor, e.g., $K_0 = \frac{Z_0 - Z_1}{Z_1}$,

$Z_0$ denotes a zero-sequence impedance as seen from the location of the relay to the end of the protected zone, and
$Z_1$ denotes a positive-sequence impedance as seen from the location of the relay to the end of the protected zone.

Phase-to-phase loop impedance may be computed as follows.

$$Z_{PP} = \frac{V_{Phase,1} - V_{phase,2}}{I_{Phase,1} - I_{phase,2}} \qquad (2)$$

Wherein $V_{phase,1}$ and $V_{phase,2}$ denote phase-to-ground voltages measured at the relay location of the transmission line, e.g., $V_A$ and $V_B$, $V_B$ and $V_C$, and $V_C$ and $V_A$, and wherein $I_{phase,1}$ and $I_{phase,2}$ denote phase-to-ground voltages measured at the relay location of the transmission line, e.g., $I_A$ and $I_B$, $I_B$ and $I_C$, and $I_C$ and $I_A$.

As evident from the equations above, the calculations are based on Ohm's law, which requires that both the input variables such as voltages and currents must be in the same frequency domain. For 50 Hz power systems, those measurement inputs should be 50 Hz phasors, so as to justify the calculations above.

However, in case of variable renewable source connected lines, the measured voltages and currents in the variable renewable source side might not have the same frequencies during fault period, so that equations (1) and (2) might have errors in the calculation results. This may lead to misjudgements such as over-reach or under-reach for a distance protection.

In view of the above, a first method may utilize sequence voltages with the phase domain calculation to the distance protection reach point. The basic concept of this method is to calculate reach point sequence voltages: positive-sequence voltage at the reach point $V_{a1,rp}$, a negative-sequence voltage at the reach point $V_{a2,rp}$, and a zero-sequence voltage at the reach point $V_{a0,rp}$. Then, an operation quantity of eq. (3) and a restrain quantity of eq. (4) can be computed and compared with each other for AG fault in the reach point as an example.

$$V_{op} = V_{a0,rp} + V_{a2,rp} \qquad (3)$$

$$V_{restraint} = V_{a1,rp} \qquad (4)$$

If the operation quantity, $V_{op}$ is larger than restrain quantity, $V_{restraint}$, an internal fault within the protection zone can be determined, so that a trip signal can be issued. It is noted that equations (3) and (4) are computed for phase-A related unsymmetrical fault detection such as AG fault, ABG fault, ACG fault, AB fault, and AC fault. In case of phase-B related faults or phase-C related faults, the calculations of equations (3) and (4) may be based on the respective phase signals. For example, for a BG fault, the operation value if formed by summation of $V_{b0,rp}$ and $V_{b2,rp}$ while the restrain quantity can be formed by using $V_{b1,rp}$. Here, $V_{b0,rp}$ is zero sequence voltage calculated in the reach point for phase B. $V_{b2,rp}$ is the negative sequence voltage calculated in the reach point for phase B. $V_{b1,rp}$ is the positive sequence voltage calculated in the reach point for phase B.

The calculation of the reach point sequence voltages can be based on the phasor domain. In this case, the reach point sequence voltages such as $V_{a1,rp}$, $V_{a2,rp}$, and $V_{a0,rp}$ can be calculated from the relay measurement point by subtracting the corresponding sequence voltage drops along the line.

$$V_{a1,rp} = V_{a1,IED} - Z_{1,set} \cdot I_{a1} \qquad (5)$$

$$V_{a2,rp} = V_{a2,IED} - Z_{2,set} \cdot I_{a2} \qquad (6)$$

$$V_{a0,rp} = V_{a0,IED} - Z_{0,set} \cdot I_{a0} \qquad (7)$$

Here, $Z_{1,set}$, $Z_{2,set}$, and $Z_{3,set}$ denote a positive-sequence impedance, a negative-sequence impedance and a zero-sequence impedance from relay location to the reach point, respectively.

$$U_{a.rp} = U_{a1,rp} + V_{a2,rp} + V_{a0,rp}$$
$$U_{b,rp} = a^2 * U_{a,rp}$$
$$U_{c,rp} = a * U_{a,rp}$$

$$\qquad (8)$$

with a=-0.5+j0.866 and a2=-0.5-j0.866.

It is also possible to calculate the reach point voltages based on the phasor domain by using line parameters, in particular by using original three phase transmission line self-impedances and coupling impedances with original three phase currents in phase domain as follows.

$$\begin{pmatrix} U_{a,rp} \\ U_{b,rp} \\ U_{c,rp} \end{pmatrix} = Reach_{setting} \times \begin{pmatrix} Z_{SS} & Z_{mm} & Z_{mmac} \\ Z_{mm} & Z_{SS} & Z_{mm} \\ Z_{mm} & Z_{mm} & Z_{SS} \end{pmatrix} \times \begin{pmatrix} I_A \\ I_B \\ I_C \end{pmatrix} \qquad (9)$$

Here, $Z_{mm}$ denotes a transmission line self-impedance for each phase within a three phase transmission line, $Z_{mm}$ denotes the coupling impedance between each two phases such as AB, BC, and CA. It is assumed that the three phase lines are transposed with the same coupling impedance between each two phases and same self-impedance. $I_A$, $I_B$, and $I_C$ are three phase currents in phasor domain. $U_{a,rp}$, $U_{b,rp}$, and $U_{crpP}$ are phasor domain voltages calculated to the reach point based on setting value as "$Reach_{setting}$", which is normally equal to 0.8 as 80% of the line length for a typical setting for line protection.

The reach point voltages can also be calculated based on the time domain. Here, two steps are proposed by using time domain differential equations, as follows:

In a first step, reach point voltages are calculated based on local IWD measured voltage and current signals and line impedance parameters R and L. Here, $R=R_1$ is the positive sequence resistance to reach point and $L=L_1$ is the positive inductance to the reach point.

$$u_{a\_RP}(t) = u_a(t) - \left[R \cdot (i_a(t) + k_R \cdot 3i_0(t)) + L \cdot \frac{d(i_a(t) + k_L \cdot 3i_0(t))}{dt}\right]$$

$$u_{b\_RP}(t) = u_b(t) - \left[R \cdot (i_b(t) + k_R \cdot 3i_0(t)) + L \cdot \frac{d(i_b(t) + k_L \cdot 3i_0(t))}{dt}\right]$$

$$u_{c\_RP}(t) = u_c(t) - \left[R \cdot (i_c(t) + k_R \cdot 3i_0(t)) + L \cdot \frac{d(i_c(t) + k_L \cdot 3i_0(t))}{dt}\right]$$

$$k_R = \frac{R_0 - R_1}{3R_1} \quad k_X = \frac{X_0 - X_1}{3X_1}$$

(10)

$u_{a\_RP}(t)$: Reach point phase A voltage

$u_{b\_RP}(t)$: Reach point phase B voltage

$u_{c\_RP}(t)$: Reach point phase C voltage

Here Ro is the zero-sequence resistance to the reach point and $X_0$ is the zero-sequence reactance to the reach point, $i_0$ is the zero-sequence current. $u_a$, $u_b$, $u_c$ are relay measured three phase voltages and $i_a$, $i_b$, $i_c$ are relay measured three phase currents.

In a second step, the reach point voltages are converted to phasors by using a Fourier transformation.

Moreover, the reach point voltage calculation can also be done with other alternative solutions such as distributed transmission line modelling either based on telegraph equations or based on hyperbolic trigonometric functions for receiving end and sending end voltage calculations for long lines. Another solution can also be done by using a Pi-model based on lump line parameters for short length of lines.

However, there is a need for an improved method, device, and system for controlling an electrical system comprising a transmission line.

Specifically, power system faults in a transmission line include phase A to ground fault, B to ground fault; C to ground, phase AB to ground fault, BC to ground fault, CA to ground fault; Phase AB fault, BC fault, CA fault and three phase faults ABC fault or ABC to ground fault. During ABC fault or ABCG fault, both negative sequence and zero sequence components become zero so that equation (3) is no longer available for detecting ABC/ABCG fault. Therefore, a new solution is required.

Accordingly, the present disclosure provides a method and device for determining an internal fault in a three-phase transmission line, as defined by the appended independent claims; the dependent claims describe embodiments of the present disclosure.

The method according to the present disclosure comprises the steps of obtaining phase voltage signals for a reach point on the three-phase transmission line, determining reach point sequence voltages from the phase voltage signals, determining modified reach point sequence voltages by delaying one of the phase voltage signals at the reach point, obtaining an operation quantity and a restrain quantity using the modified reach point voltages, and determining an internal symmetrical fault in the three-phase transmission line based on a comparison of the operation quantity and the restrain quantity.

The present disclosure is a solution based on the idea to delay one phase voltage at reach point for several cycles to virtually create a unsymmetrical fault condition so that ABC/ABCG fault can be detected. The present disclosure may thus be used for ABC/ABCG fault detection for three phase transmission systems.

According to the present disclosure, delaying one of the phase voltage signals at the reach point may comprise delaying the one of the phase voltage signals at the reach point by a multiple of a power cycle time period.

The reach point sequence voltages may be determined in a phasor domain or in a time domain. The reach point sequence voltages in the phasor domain may be calculated by using a Fourier Transformation method.

The restrain quantity may be the magnitude of a reach point positive sequence voltage and the operation quantity may be a reach point negative sequence voltage. An internal fault may be determined when the operation quantity is greater than the restrain quantity.

Furthermore, the disclosure provides a device for determining an internal symmetrical fault in a three-phase transmission. The device comprises a processor being configured for obtaining phase voltage signals for a reach point on the three-phase transmission line, determining reach point sequence voltages from the phase voltage signals, determining modified reach point sequence voltages by delaying one of the phase voltage signals at the reach point, obtaining an operation quantity and a restrain quantity using the modified reach point voltages, and determining an internal symmetrical fault in a three-phase transmission based on a comparison of the operation quantity and the restrain quantity.

The device may further comprise a device for obtaining the phase voltage signals on the three-phase transmission line.

The disclosure further provides a system for determining an internal symmetrical fault in a three-phase transmission that includes a device as described above and a three-phase transmission line.

With the present disclosure, faster, cheaper and safer determination of an internal fault, in particular a symmetrical internal fault in a three-phase transmission line. The method, device and system of the present disclosure greatly improve the dependability of existing distance protection solutions used in AC power systems either with wind farm connections or without wind farm connections.

The present disclosure will be described in more detail in the following description with reference to figures, wherein

Fig. 1   shows a typical transmission line connected with two source ends,

Fig. 2   illustrates the reach point voltages during three phase faults, wherein the original voltages and voltage signals with phase A being delayed by two cycles are shown,

Fig. 3   is a diagram showing the operation quantity together with the restrain quantity, and the corresponding tripping signal for an ABCG fault at 80% of the transmission line length,

Fig. 4   shows the corresponding diagram as Fig. 3 for a three phase fault at 85% of the line length,

Fig. 5   illustrates a grid following converter as usually used in wind farms,

Fig. 6   shows the impact of a weak source on the PLL output during ABCG faults,

Fig. 7   shows the impact of a strong source on the PLL output during ABCG faults,

Fig. 8   shows the impact of a Non-Linear behavior of a grid following converter on known fault detection solutions,

Fig. 9   shows the system strength impact on voltage-based distance protection (VDP) solutions, and

Fig. 10   shows the impact of a non-linear behavior when applying the method according to the present disclosure.

As can be noticed by a skilled person, equations (3) and (4) have used negative sequence voltage and zero sequence voltage at the reach point as operating quantities to detect faults. This is however only applicable for unbalanced faults since there are no negative sequence voltage and zero sequence voltage available during three phase faults as balanced faults. As a result, equations (3) and (4) cannot be used for three phase fault detection in fact. The present disclosure therefore provides a new solution to cover the three phase faults, by using delayed a one phase quantity for three phase fault detection, as will be described in the following.

Based on the issue that there is no available operation quantities during three phase faults, the present disclosure relies on the new idea or solution to create a virtual unbalanced fault during three phase fault period by delaying one phase voltage signal calculated in the reach point with a couple of power cycles. This can be achieved by delaying one phase signals of the original relay location voltage and current inputs as given in equations (5),(6) and (7), or equation (8) as well as equation (9) above.

The mathematical expression of proposed solution can be given as below when using phasor domain calculated reach point voltages from equation (8).

$$U_{a\_rp\_new1}(t) = U_{a\_rp}(t - NT)$$
$$U_{b\_rp\_new1}(t) = U_{b\_rp}(t)$$
$$U_{c\_rp\_new1}(t) = U_{c\_rp}(t)$$

$$(11)$$

The mathematical expression of proposed solution can also be given if time domain calculated reach point voltages from equation (10) are used as follows.

$$U_{a\_RP\_new}(t) = U_{a\_RP}(t - NT)$$
$$U_{b\_RP\_new}(t) = U_{b\_RP}(t)$$
$$U_{c\_RP\_new}(t) = U_{c\_RP}(t) \qquad (12)$$

Here, N denotes cycle numbers which is based on the fundamental frequency of the power system, that is, 50Hz or 60Hz for typical AC transmission systems. T denotes one cycle time period which is 20 ms for 50 Hz power systems or 16.67 ms for 60Hz systems.

The phasor domain quantities of reach point voltages *Ua_rp_new2, Ub_rpnew2,* and *Uc_rp_new2,* can be calculated by using typical Fourier Transformation methods. One example of Fourier transformation solution can be given below in equation (13).

$$\begin{pmatrix} U_{a\_rp\_new2} \\ U_{b\_rp\_new2} \\ U_{c\_rp\_new2} \end{pmatrix} = \frac{1}{T} \begin{pmatrix} \int_{t_o}^{t_o+T} u_{a\_RP\_new}(t)e^{-j\omega t}\,dt \\ \int_{t_o}^{t_o+T} u_{b\_RP\_new}(t)e^{-j\omega t}\,dt \\ \int_{t_o}^{t_o+T} u_{c\_RP\_new}(t)e^{-j\omega t}\,dt \end{pmatrix} \qquad (13)$$

With the above modification as given in equations (11) and (12), as well as the phasor domain transformation in equation (13), the reach point sequence voltages can be calculated. Equation (14) has shown the reach point sequence voltages by using equation (12) and (13) as an example. It can be noticed that the Fourier transformation is not necessary if equation (11) is used with $Ua\_rp\_new1$, $Ub\_rp\_new1$ and $Uc\_rp\_new1$, because those quantities are already phasor quantities.

$$\begin{pmatrix} U_{0\_RP\_new} \\ U_{1\_RP\_new} \\ U_{2\_RP\_new} \end{pmatrix} = \frac{1}{3} \begin{pmatrix} 1 & 1 & 1 \\ 1 & a & a^2 \\ 1 & a^2 & a \end{pmatrix} \begin{pmatrix} U_{a\_rp\_new2} \\ U_{b\_rp\_new2} \\ U_{c\_rp\_new2} \end{pmatrix} \qquad (14)$$

Based on the delayed signals, a new solution for three phase fault detection can be provided, which is based on a comparison between operation quantity (such as reach point negative sequence voltage $Ua2\_rp\_new$) and restrain quantity ( such as positive sequence voltage at reach point $Ua1\_rp\_new$ ) as given below for internal three phase fault.

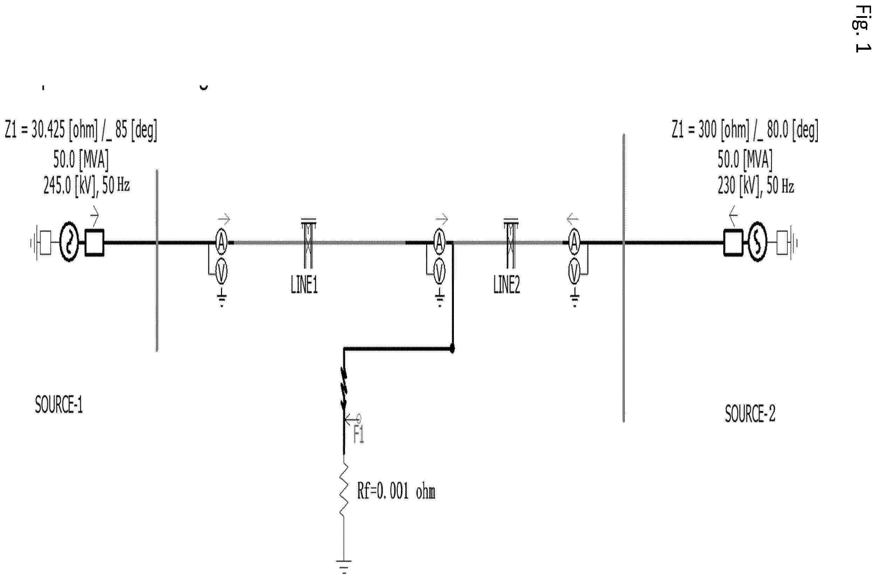

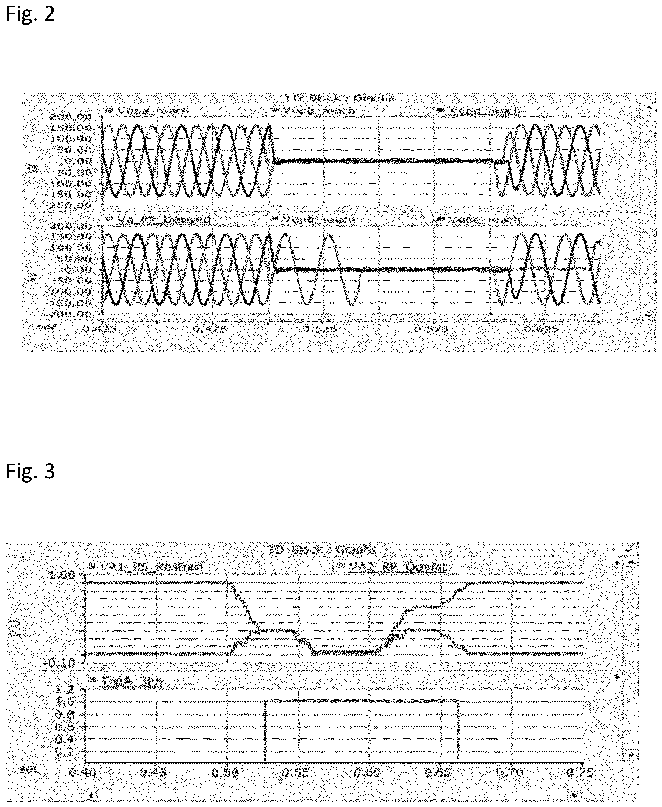

The solution proposed by the present disclosure can be given based on a test system, as shown in Fig. 1 that shows a typical transmission line connected with two source ends. Fig. 2 shows three phase voltages during three phase faults in the upper window and with phase A voltage delayed for 2 cycles in the bottom window.

As mentioned above, the solution for three phase fault detection proposed by the present disclosure is based on the comparison between the operation quantity (reach point negative sequence voltage $Ua2\_rp$) and the restrain quantity (positive sequence voltage at reach point $Ua1\_rp$ ). For an internal fault, these quantities are thus defined as follows.

$$U_{op} = |U_{a2\_rp}|$$
$$U_{restrain} = |U_{a1\_rp}|$$
$$\text{If } U_{op} > U_{restrain} \quad \text{an internal fault confirmed}$$
$$(15)$$

A result of this trip criterion during three phase fault period at 80% of the line length is shown in Fig. 3. Here, the bottom window shows that a trip signal is issued at t=25ms following the fault inception time. The condition of equation (15) is thus confirmed.

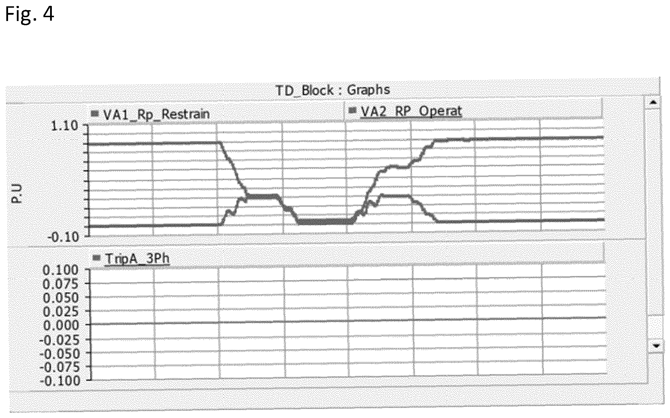

For further verification of the claimed method, different types of unbalanced faults have been tested by using two sources connected by a transmission line as shown in Fig. 1. The tests show that the given solution is stable under these conditions. Specifically, one external three phase fault located at 85% of line length is tested with stable results as an example. The corresponding results are shown in Fig. 4.

The presented results thus confirm that the solution proposed by the present disclosure is able to reliably detect three phase faults in the protected zone.

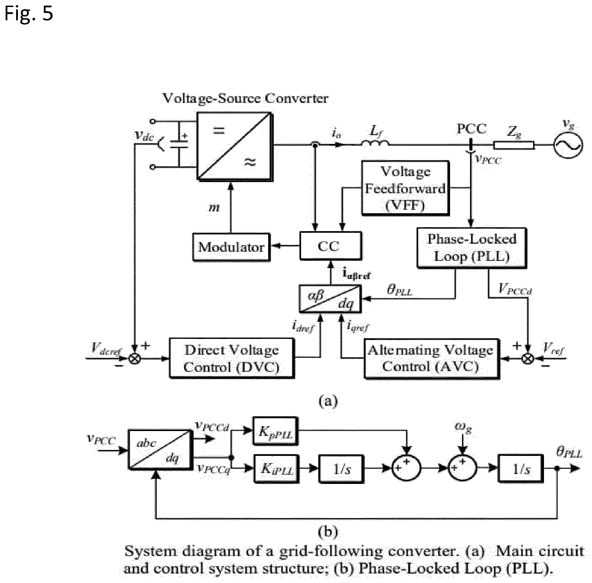

In the specific application of transmission lines in power grids involving renewable sources, such as wind farms, it is natural to see different source strengths in the grid side. In the power system protection domain, the source strength is measured as source impedance ratio (SIR) which is the ratio of source impedance ($Z_s$) divided by protection line impedance (Zj). This means if SIR is low, the source is strong and if SIR is higher, the source is weak. On the other hand, as it is well known, most of wind farms are still using the converters which are controlled with grid-following controllers. The typical control of grid following converter can be seen in Fig. 5, where (a) shows the mains circuit and the control system structure, and (b) shows the phase-locked loop (PLL).

The main demand of grid following converter is to use the grid side three phase voltage inputs ($Vpcc$) at point of common coupling (PCC) to form a phase lock loop (PLL) so that the converter outputs will have the same frequency as connected grids. As it can be seen from Fig. 5, the output of PLL is a phase angle which is proportional to the given power grid frequency. In case of weak system in grid side, it is possible for the PLL output loss synchronization with given grid during three phase fault period.

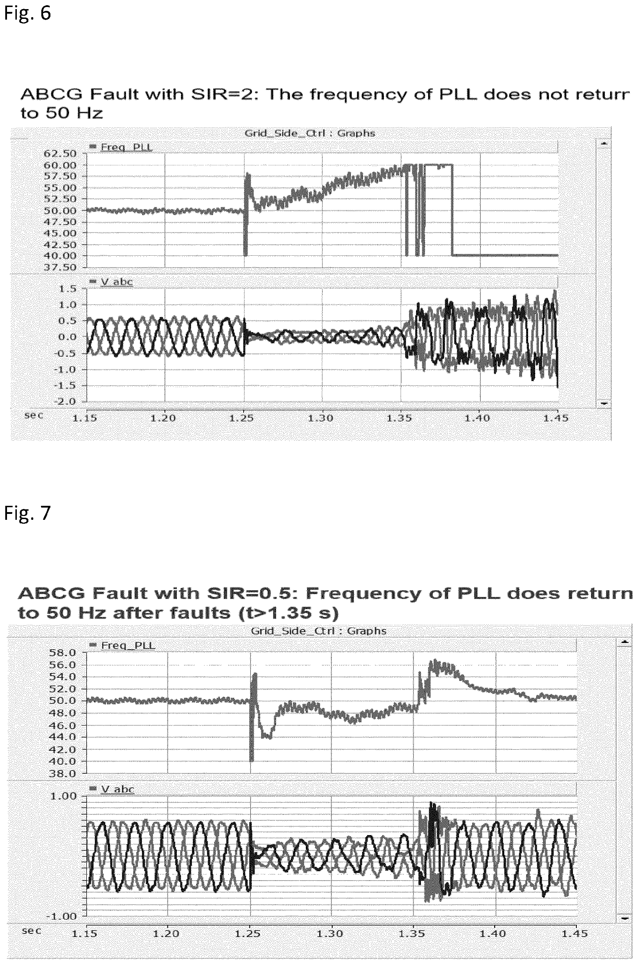

To verify this phenomenon, an ABCG fault is applied in the transmission line at 70% of line length with a Type 4 wind farm connected grid with weak source (SIR=2). Fig. 6 shows the impact on a PLL Output during an ABCG fault and indicates that after an ABCG fault, the PLL output frequency does not return to 50 Hz, which means that the grid follower controller lost synchronization with the connected grids.

If the grid side source strength is increased to SIR=0.5, the PLL output will be in synchronization with the grid frequency even after ABCG faults. Fig. 7 shows the results.

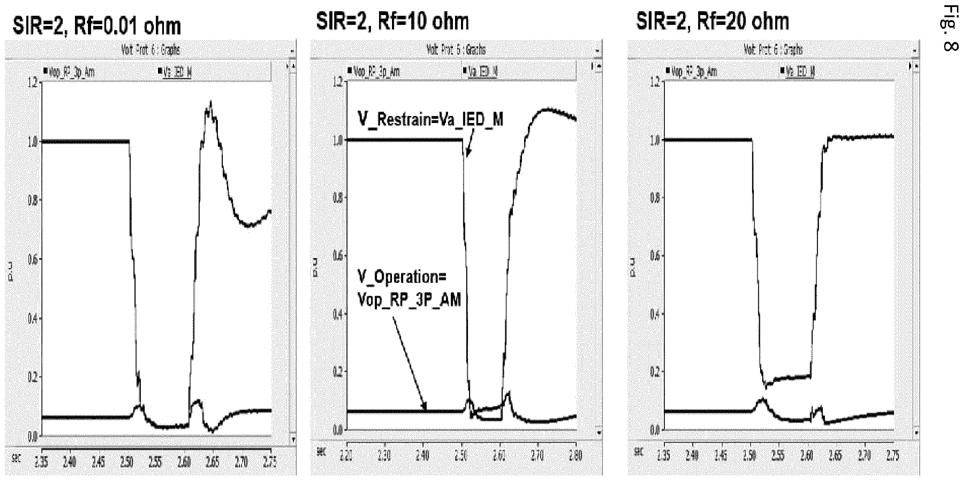

The above issue with weak source on the grid side will thus introduce a non-linear behavior for a fault detection solution based on known voltage-based distance protection (VDP) solutions for ABCG fault detection. Fig. 8 shows this type of non-linear issues when grid side is a weak source with SIR=2. For ABCG fault at boundary of Zone 1 setting with Rf=0.01 ohm, the operation value Vop_RP_3p_Am (lower line in the diagram) is in the same level as restrain value V_IED_local_D. Then the same fault is applied with Rf=10 ohm, it is noticed that there is short period of cross section between operational value and restrain value. As a result, the previously existing protection solution might trip incorrectly. On the other hand, if Rf is increased to Rf=20 ohm, the operational value and restrain value has a clear gap again.

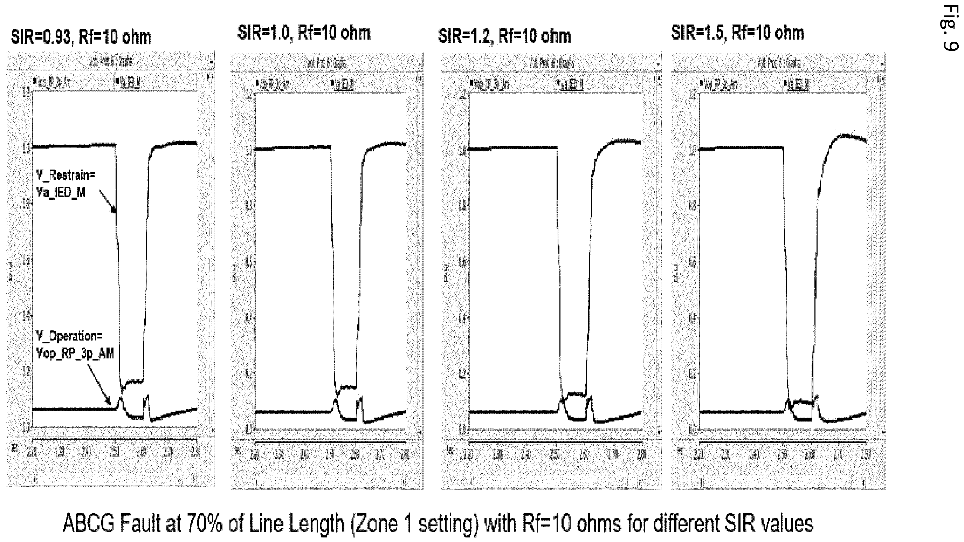

Further exploring on the impact of the grid side source strength can be done with different SIR values. Fig. 9 shows the exploring results. It can be noticed that for the same ABCG fault with Rf=10 ohm, the non-linear behavior will disappear when system strength is increased to SIR<1.0.

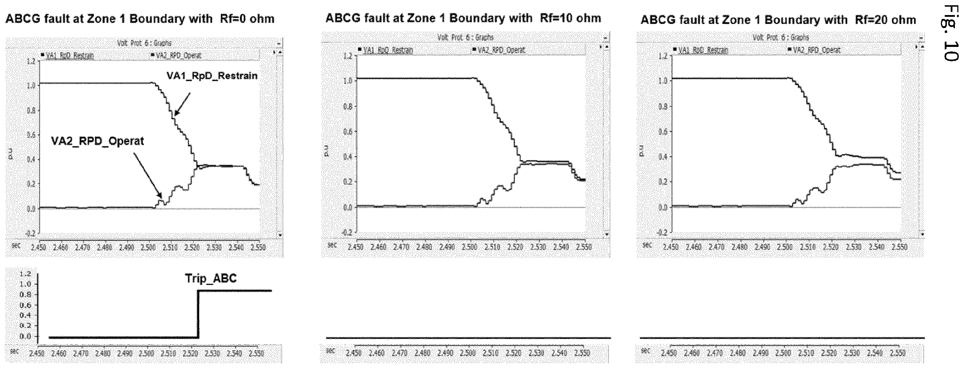

The present disclosure provides a solution to this problem by delaying one phase voltage at the reach point, so that it is possible to check the calculated positive sequence voltage as restrain signal and negative sequence voltage as operational signal by using these two signals. Fig. 10 shows the corresponding behavior then applying an ABCG fault at 70 % of the length of the transmission line at different Rf values, in a way similar to Fig. 4. As can be seen from Fig. 10, by applying the method according to the present invention, a non-linear impact due to weak source system can be is mitigated.

The claimed method is thus suitable for variable renewable sources connected systems and has a better dependability and security for three phase fault detection and protection. The present invention thus can greatly improve the dependability and security of existing distance protection solutions used in AC power systems with wind farm connections.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for determining an internal fault in a three-phase transmission line, the method comprising:

   obtaining phase voltage signals for a reach point on the three-phase transmission line,
   determining reach point sequence voltages from the phase voltage signals,
   determining modified reach point sequence voltages by delaying one of the phase voltage signals at the reach point,
   obtaining an operation quantity and a restrain quantity using the modified reach point voltages, and
   determining an internal symmetrical fault in the three-phase transmission line based on a comparison of the operation quantity and the restrain quantity.

2. Method according to claim 1, wherein delaying one of the phase voltage signals at the reach point comprises delaying one of the phase voltage signals at the reach point by a multiple of a power cycle time period.

3. Method according to claim 1 or 2, wherein the reach point sequence voltages are determined in a phasor domain.

4. Method according to claim 1 or 2, wherein the reach point sequence voltages are determined in a time domain.

5. Method according to claim 3, wherein the reach point sequence voltages in the phasor domain are calculated by using a Fourier Transformation method.

6. Method according to any one of claims 1 to 5, wherein the restrain quantity is the magnitude of a reach point positive sequence voltage and the operation quantity is a reach point negative sequence voltage.

7. Method according to any one of claims 1 to 6, wherein an internal fault is determined when the operation quantity is greater than the restrain quantity.

8. Method according to any one of claims 1 to 7, wherein the internal fault is determined in a transmission line in a power grid including a variable renewable source, in particular a wind farm.

9. A device for determining an internal symmetrical fault in a three-phase transmission, the device comprising a processor being configured for:

obtaining phase voltage signals for a reach point on the three-phase transmission line,
determining reach point sequence voltages from the phase voltage signals,
determining modified reach point sequence voltages by delaying one of the phase voltage signals at the reach point,
obtaining an operation quantity and a restrain quantity using the modified reach point voltages, and
determining an internal symmetrical fault in a three-phase transmission based on a comparison of the operation quantity and the restrain quantity.

10. The device of claim 8, further comprising a device for obtaining the phase voltage signals on the three-phase transmission line.

11. A system for determining an internal symmetrical fault in a three-phase transmission, the system comprising:

the device according to claims 8 or 9, and
a three-phase transmission line.

12. System of claim 11, wherein the transmission line connects a variable renewable source in a power grid, in particular a wind farm.

Fig. 1

Fig. 2

Fig. 3

Fig. 4

Fig. 5

System diagram of a grid-following converter. (a)  Main circuit
and control system structure; (b) Phase-Locked Loop (PLL).

Fig. 6

ABCG Fault with SIR=2: The frequency of PLL does not return to 50 Hz

Fig. 7

ABCG Fault with SIR=0.5: Frequency of PLL does return to 50 Hz after faults (t>1.35 s)

Fig. 8

Fig. 9

ABCG Fault at 70% of Line Length (Zone 1 setting) with Rf=10 ohms for different SIR values

Fig. 10

Europäisches
Patentamt

European
Patent Office

Office européen
des brevets

## EUROPEAN SEARCH REPORT

**Application Number**

EP 24 16 2663

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHWEITZER EDMUND O ET AL: "Distance protection: Why have we started with a circle, does it matter, and what else is out there?", 2018 71ST ANNUAL CONFERENCE FOR PROTECTIVE RELAY ENGINEERS (CPRE), IEEE, 26 March 2018 (2018-03-26), pages 1-19, XP033336067, DOI: 10.1109/CPRE.2018.8349791 [retrieved on 2018-04-25] | 1-5,7-12 | INV. H02H3/40 |
| Y | * Section V; figures 10-12, 14-17 * | 6 | |
| Y | US 2021/408782 A1 (KASZTENNY BOGDAN Z [CA] ET AL) 30 December 2021 (2021-12-30) * paragraphs [0030], [0053]; figures 1-3 * | 6 | |
| A | US 2020/319262 A1 (LI YOUYI [SE] ET AL) 8 October 2020 (2020-10-08) * paragraphs [0033] - [0047]; figures 1-3 * | 1,9 | |

**TECHNICAL FIELDS SEARCHED (IPC)**

H02H
G01R

The present search report has been drawn up for all claims

| Place of search | Date of completion of the search | Examiner |
|---|---|---|
| Munich | 16 September 2024 | Colombo, Alessandro |

EPO FORM 1503 03.82 (P04C01)

**EP 4 618 340 A1**

## ANNEX TO THE EUROPEAN SEARCH REPORT
## ON EUROPEAN PATENT APPLICATION NO.

EP 24 16 2663

16-09-2024

| Patent document cited in search report | Publication date | Patent family member(s) | Publication date |
|---|---|---|---|
| US 2021408782 A1 | 30-12-2021 | NONE | |
| US 2020319262 A1 | 08-10-2020 | CN 111796202 A | 20-10-2020 |
| | | EP 3723224 A1 | 14-10-2020 |
| | | US 2020319262 A1 | 08-10-2020 |

EPO FORM P0459